# EUROPÄISCHE PATENTSCHRIFT

(11) **EP 1 290 431 B1**
(45) Veröffentlichungstag und Bekanntmachung des Hinweises auf die Patenterteilung: **16.04.2008**
(21) Anmeldenummer: 01944719.2
(22) Anmeldetag: 11.06.2001
(51) Int. Cl.: G12B 21/02, G01B 7/34

(54) **VERFAHREN ZUR HERSTELLUNG EINER VORRICHTUNG FÜR DIE GLEICHZEITIGE DURCHFÜHRUNG EINER ELEKTROCHEMISCHEN UND EINER TOPOGRAPHISCHEN NAHFELDMIKROSKOPIE**
METHOD FOR PRODUCING A DEVICE FOR SIMULTANEOUSLY CARRYING OUT AN ELECTROCHEMICAL AND A TOPOGRAPHICAL NEAR-FIELD MICROSCOPY
PROCEDE POUR LA PRODUCTION D'UN DISPOSITIF PERMETTANT L'EXECUTION SIMULTANEE D'UNE MICROSCOPIE A CHAMP PROCHE ELECTROCHIMIQUE ET TOPOGRAPHIQUE

(30) Priorität: 09.06.2000 AT 10112000
(43) Veröffentlichungstag der Anmeldung: 12.03.2003
(73) Patentinhaber: Lugstein, Alois, 1060 Wien (AT); Bertagnolli, Emmerich, 1060 Wien (AT); Kranz, Christine, 1060 Wien (AT); Mizaikoff, Boris, 1060 Wien (AT); Austria Wirtschaftsservice Gesellschaft mit beschränkter Haftung, 1030 Wien (AT)
(72) Erfinder: LUGSTEIN, Alois, A-1060 Wien (AT); BERTAGNOLLI, Emmerich, A-1060 Wien (AT); KRANZ, Christine, A-1060 Wien (AT); MIZAIKOFF, Boris, A-1060 Wien (AT)
(74) Vertreter: Alge, Daniel
(86) Internationale Anmeldenummer: PCT/AT2001/000191
(87) Internationale Veröffentlichungsnummer: WO 2001/094926

(56) Entgegenhaltungen:
- EP-A- 0 539 731
- DE-C- 19 636 582
- US-A- 5 844 251
- US-A- 5 936 237
- MACPHERSON J V ET AL: "COMBINED SCANNING ELECTROCHEMICAL-ATOMIC FORCE MICROSCOPY" ANALYTICAL CHEMISTRY, AMERICAN CHEMICAL SOCIETY. COLUMBUS, US, Bd. 72, Nr. 2, 15. Januar 2000 (2000-01-15), Seiten 276-285, XP000954970 ISSN: 0003-2700 in der Anmeldung erwähnt
- JAMES P I ET AL: "SCANNING ELECTROCHEMICAL MICROSCOPY WITH SIMULTANEOUS INDEPENDENT TOPOGRAPHY" JOURNAL OF THE ELECTROCHEMICAL SOCIETY, ELECTROCHEMICAL SOCIETY. MANCHESTER, NEW HAMPSHIRE, US, Bd. 145, Nr. 4, April 1998 (1998-04), Seiten L64-L66, XP001013075 ISSN: 0013-4651 in der Anmeldung erwähnt

## Beschreibung

Die vorliegende Erfindung betrifft ein Verfahren zur Herstellung einer Vorrichtung für die gleichzeitige Durchführung einer elektrochemischen und einer topographischen Nahfeldmikroskopie.

Die Nutzung von Ultramikrosonden zur lateral aufgelösten Charakterisierung von Probenoberflächen liefert quantitative bzw. semiquantitative Aussagen über Größen wie Oberflächenaktivität/Oberflächenreaktivität, über die Kinetik von heterogenen sowie homogenen Elektrontransferreaktionen, über Korrosionsprozesse, über die Aktivität biologischer Komponenten und Systeme (z.B. die Quantifizierung von Enzymaktivitäten, die Untersuchung von Stofftransportphänomenen an Membranen, Geweben und Gewebsteilen, Stoffwechselaktivitäten von Einzelzellen, Zellgruppen und Zellhaufen, sowie von Organteilen und Organen) und kann ebenfalls auf das weite Gebiet der lateral aufgelösten Oberflächenmodifikation mittels Ätzens (Abtragen von Material) oder Abscheidens (Auftragen von Material) angewendet werden.

Voraussetzung hierfür ist jedoch eine exakte, reproduzierbare Abstandskontrolle zwischen der Sonde und Probenoberfläche im Bereich einiger Elektrodenradien. Bisher wurde in den meisten in der Literatur beschriebenen Anwendungen die an der Mikroelektrode gemessene Änderung des Faraday'schen Stromes im Nahfeldbereich zur Positionierung genutzt (vgl. Bard, et al. Science 254 (1991), 68-74).

Da aber wie bisher im realen Experiment weder von einer idealen Elektrodengeometrie (besonders wenn die Elektroden sehr klein werden), noch von einer ideal parallelen Anordnung der Elektrode zur Probenoberfläche ausgegangen werden kann, kann der Abstand zwischen Ultramikroelektrode und Oberfläche nur relativ bestimmt werden.

Da im konventionellen Experiment die Ultramikroelektrode nicht allein den topographischen Gegebenheiten folgt, stellt das erhaltene Bild der Oberfläche eine Überlagerung der Einflüsse der elektrochemischen Aktivität und der Distanz zwischen Probenoberfläche und Sonde auf den gemessenen Faraday'schen Strom an der Ultramikroelektrode dar. Diese Überlagerungseinflüsse steigen proportional mit der Abnahme der elektroaktiven Sondenfläche an.

Da eine deutliche Verbesserung der Auflösung nur durch den Einsatz kleinerer Elektroden (<1 µm Radius) erzielt werden kann, muss eine alternative Abstandskontrolle eingesetzt werden.

Erste Ansätze, um dieses Problem zu lösen, beruhen zum einen auf einer Vertikal-Modulation der Elektrode, um zwischen leitenden Regionen mit Stromanstieg und nicht-leitenden Regionen mit Stromabfall unterscheiden zu können (vgl. Wipf et al., Anal. Chem. 64 (1992), 1362-1367,). Durch eine Logikschaltung kann die Mikroelektrode der Topographie nachgeführt werden, jedoch nicht in den Randregionen zwischen leitend und nicht leitend. Zum anderen beruht die Abstandskontrolle auf konvektiven Effekten, die bei schneller Bewegung der Sonde senkrecht zur Oberfläche hin zu Stromänderungen führen (vgl. Borgwarth et al., Ber. Bunsenges. Phys. Chem. 98 (1994), 1317).

Beide Methoden beruhen weiterhin auf einem stromabhängigen Signal und der Abstand zwischen Sonde und Probe kann nicht exakt aus den Annäherungskurven bestimmt werden.

Demgegenüber konnte eine stromunabhängige Höhenkontrolle, basierend auf der Detektion von Scherkräften, wie sie bereits in der optischen Rasternahfeldmikroskopie eingesetzt wurde, erfolgreich zur Positionierung von Mikroelektroden verwendet werden. (Ludwig et al., Rev. Sci. Instr., 66 (1995), 2857-2860). Grundlage der scherkraftbasierten Höhenkontrolle ist die Anregung der Mikroelektrode zu Schwingungen horizontal zur Oberfläche mittels eines Piezoelements und die Detektion der Schwingungsdämpfung aufgrund hydrodynamischer Effekte, wenn die Sonde an die Probenoberfläche angenähert wird.

In der US-PS 5,936,237 wird eine Kombination von elektromagnetischer und topographischer Nahfeldmikroskopie beschrieben. Eine elektrochemische Nahfeldmikroskopie ist aber - alleine schon auf Grund der vollkommen unterschiedlichen zugrundeliegenden lokalen Wechselwirkungen und der damit verbundenen konstruktiven Maßnahmen für die elektrochemische Messung einerseits und die elektromagnetische Messung andererseits - mit der dort beschriebenen Vorrichtung nicht möglich.

Die DE 196 36 582 C1 beschreibt einen Sensor zur ortsaufgelösten simultanen Messung von Ionenkonzentrationen und Strukturen von Oberflächen bestehend aus einer mehrfach beschichteten Sonde mit einer Messspitze, die eine ionenselektive Schicht aufweist.

Ludwig et al. beschrieben eine stromunabhängige Höhenkontrolle, die auf einem optischen Detektionsprinzip beruht. Ein auf die Spitze der Sonde fokussierter Laserstrahl erzeugt ein Fresnel'-sches Beugungsmuster, welches an einer geteilten Photodiode detektiert und mit Hilfe einer Lock-in-Technik verstärkt wird.

Neben dem optischen Verfahren können auch mechanische Methoden, basierend auf einer kleinen Stimmgabel aus piezoelektrischem Material, die an der Mikroelektrode befestigt wird, zur Detektion der Schwingung herangezogen werden (James et al., J. Electrochem. Soc., 145 (1998), L64-L66). Bei diesem Ansatz muss die Schwingungsamplitude an der Spitze der Sonde so klein gewählt werden, dass das elektrochemische Signal nicht wesentlich verfälscht wird. Diese Bedingung stellt gleichzeitig die wesentliche Limitierung für den Einsatz von Ultramikroelektroden und damit für eine verbesserte laterale Auflösung dar.

Ein weiterer Ansatz zur unabhängigen Topographieerfassung wurde von Macpherson et al. beschrieben (Macpherson et al., Anal. Chem., 72 (2000), 276). Die Grundlage hierfür ist die Herstellung von Mikroelektroden, deren Geometrie und Eigenschaften an einen AFM-Cantilever angepasst sind. Dazu wird an einem Platindraht einseitig durch Ätzen eine feine Spitze geformt und der dahinterliegende Teil des Drahtes flach gepresst. Durch Umbiegen der Spitze um 90° entsteht eine dem Cantilever ähnliche Elektrode, die mit Hilfe eines Elektro-Depositionslackes mit Ausnahme der Elektrodenspitze isoliert wird.

Der abgeflachte Teil dient aufgrund seiner Elastizität zur Abstandskontrolle basierend auf der Kraftwechselwirkung zwischen Probe und Sonde im Nahfeldbereich.

Mit derartigen Spitzen konnten unter Zuhilfenahme eines AFM-Gerätes Probenoberflächen, z.B. Ultrafiltrationsmembranen, im Kontaktmodus abgebildet werden. Mit dem beschriebenen Ansatz konnten Elektroden mit einer Variationsbreite der elektroaktiven Fläche im pm- und sub-µm-Bereich hergestellt werden, wobei vereinfacht eine hemisphärische Geometrie angenommen und die elektroaktive Fläche mit Hilfe der zyklischen Voltammetrie abgeschätzt wurde.

Die wesentliche Limitierung ist jedoch sowohl in der Art der zu untersuchenden Proben zu sehen, als auch in der wenig reproduzierbaren Herstellung der elektrochemischen Sonden durch den Ätz- und Isolationsprozess, sowie der schlechten topographischen Auflösung aufgrund der undefinierten Spitzengeometrie, wie sie anhand der Qualität der aufgenommen AFM-Bilder mit abnehmender Spitzengröße demonstriert wurde.

Für eine signifikante Verbesserung des Auflösungsvermögen zur lateral aufgelösten, elektrochemischen Charakterisierung von Oberflächen muss die elektrisch aktive Fläche der Mikrosonde verkleinert werden und die Positionierung der Elektrode absolut zur Oberfläche vollständig stromunabhängig erfolgen. Dies setzt eine Entkopplung der Abstandsinformation und des elektrochemischen Signals voraus. Die topographische Information sollte dabei mit möglichst hoher Auflösung gewährleistet sein.

Ziel der vorliegenden Erfindung ist es, eine Vorrichtung herzustellen, die eine gleichzeitige aber voneinander entkoppelte direkte Bestimmung von Topologie und von elektrochemischer Aktivität ermöglicht. Die Form der Vorrichtung bzw. der darin integrierten oder kombinierten Ultramikroelektrode, die elektrische aktive Fläche und das Verhältnis von Elektrodenfläche zum Abstand zur Oberfläche sollen variabel sein. Insbesondere soll ein Verfahren zur Herstellung derartiger Vorrichtungen zur Verfügung gestellt werden, das in hohem Maße reproduzierbar ist, einfache Serienfertigung erlaubt und optimale Messperformance ermöglicht.

Diese Aufgabe wird erfindungsgemäß gelöst durch ein Verfahren zur Herstellung einer Vorrichtung für die gleichzeitige Durchführung von elektrochemischen und einer topologischen Nahfeldmikroskopie, bei welcher eine Sonde, welche zur topologischen Abbildung durch Nahfeldtechnik geeignet ist, mit einem leitenden Material bedeckt wird, das leitende Material mit einer Isolierschicht bedeckt wird und das leitende Material und die Isolierschicht im Bereich der sich von der Spitze bis zu einem Abstand von 10 bis 2000 nm von der Spitze der Sonde erstreckt, entfernt wird. Mit dem vorliegenden Verfahren kann nicht nur eine geeignete Vorrichtung, die elektrochemische Untersuchungen von Oberflächen bei gleichzeitiger Bestimmung der Oberflächentopologie erlaubt, zur Verfügung gestellt werden, sondern es wird erfindungsgemäß mit einem verblüffend einfachen Verfahren die gut reproduzierbare Herstellung dieser Messvorrichtung ermöglicht. Das erfindungsgemäße Verfahren ist auch leicht in bereits bestehende Fabrikationsprozesse einzufügen, da beispielsweise herkömmliche topologische Nahfeld-Sonden als Ausgangsmaterial eingesetzt werden können. Durch das erfindungsgemäße Verfahren wird sichergestellt, dass sich der Bereich zur elektrochemischen Nahfeldmessung der Vorrichtung, welcher durch das leitende Material definiert wird, das nach der Entfernung der Isolierschicht die von der Probenoberfläche erhaltenen Signale aufnehmen kann, nicht bis zur äußersten Spitze der Vorrichtung reicht, sondern in einem definierten Abstand von der unmittelbaren Spitze der Vorrichtung (an der die Wechselwirkung zur topologischen Untersuchung der Oberfläche stattfindet) beginnt. Dadurch wird nicht nur die Gefahr eines Kontaktes der elektrochemischen Nahfeldmesseinrichtung mit der Oberfläche verhindert, sondern auch eine negative Beeinflussung der topologischen Nahfeldmessung.

Wesentlich für das erfindungsgemäße Verfahren ist, dass ausgehend von einer zur topologischen Nahfeldmessung geeigneten Sonde durch das Aufbringen und Isolieren eines leitenden Materials in einfacher Weise die elektrochemische Nahfeldmessung mit der topologischen Nahfeldmessung verbunden werden kann. Durch das Entfernen von leitendem Material und Isolierschicht im Bereich der unmittelbaren Spitze der Vorrichtung wird nicht nur die zur topologischen Nahfeldmessung erforderliche (Sonden-)Spitze wieder funktionsfähig gemacht sondern auch ein Bereich geschaffen, mit welchem das leitende Material zur Messung von Oberflächeneffekten im elektrochemischen Nahfeld wieder zugänglich gemacht wird. Die Isolierschicht über dem leitenden Material bewirkt, dass die Signale nur über den Bereich eintreten, der gezielt freigelegt worden ist.

Wesentlich ist also, dass der Bereich zur elektrochemischen Nahfeldmikroskopie durch Bedecken der Vorrichtung zur topographischen Nahfeldmessung ("Spitze", Cantilever") mit einem leitenden Material geschaffen wird. Dieses Bedecken kann vollständig sein ("Umhüllung"), es ist aber auch möglich, nur bestimmte Bereiche der Vorrichtung zur topographischen Nahfeldmessung (z.B. in Form von Leiterbahnen entlang der Längsachse des Cantilevers) mit leitendem Material zu bedecken.

Für den Fall, dass die Vorrichtung zur topographischen Nahfeldmessung selbst leitend ist (z.B. bei der Rastertunnelmikroskopiespitze; "scanny tunnelig microscopy (STM); oder bei "scanning nearfield optical microscopy" (SNOM-)Spitzen) muss natürlich in der Vorrichtung zunächst diese leitende Vorrichtung selbst isoliert sein, und auf dieser Isolierschicht das leitende Material für die elektrochemische Nahfeldmessung vorhanden sein. In diesem Fall wird die isolierte Form der Vorrichtung zur topographischen Nahfeldmessung mit dem leitenden Material (zumindest teilweise) bedeckt, um die Vorrichtung zur elektrochemischen Nahfeldmessung zu schaffen, welche ihrerseits dann ebenfalls (bis auf den Messbereich) isoliert werden muss.

Diese Isolierung der Vorrichtung ist wesentlich, da die elektrochemische Nahfeldmessung immer im flüssigen Medium (Elektrolyt; flüssige, leitende Phase) vorgenommen werden muss, und demgemäß die Teile der Vorrichtung zur elektrochemischen Nahfeldmessung, die nicht zur unmittelbaren Messung ("Messbereich") dienen, gegen das bei der Messung vorhandene flüssige Medium, das in der Regel die zu vermessende Oberfläche bedeckt, schützt, so dass es zu keinen unerwünschten Beeinflussungen dieser Messung kommt.

Die Art und Weise wie die Bedeckung der topologischen Nahfeldsonde mit dem leitenden Material erfolgt ist nicht kritisch. Im Allgemeinen wird es aus verfahrenstechnischen Gründen bevorzugt sein, dass die topologische Nahfeldsonde mit dem leitenden Material umhüllt wird. Es ist aber auch möglich, beispielsweise nur eine Seite der Sonde mit dem leitenden Material zu versehen. Wesentlich ist dabei nur, dass die leitende Schicht von dem Bereich, in dem die elektrochemische Nahfeldwechselwirkung mit der Oberfläche gemessen werden soll, in einem anderen Bereich der Elektrode einer geeigneten Kontaktstelle zugeführt wird, an welcher das Messsignal abgeleitet werden kann.

Die bevorzugten leitenden Materialien sind entweder Kohlenstoff, Carbonelektroden-Glaskohlenstoff, hochgeordneter pyrolytischer Graphit (HOPG), Metalle, oder sie enthalten eine metallische Komponente, insbesondere ein Übergangsmetall, wobei die Verwendung von Gold, Silber, Platin, Palladium, Wolfram, Cadmium, Aluminium, Rhodium, Iridium, Kupfer, Quecksilber-Legierungen, Platin-Iridium-Legierung, Platin-Rhodium-Legierung, besonders bevorzugt ist. Weiters können auch Materialien, wie Polysilizium, z.B. dotiert, Metallnitride (TiN, TaN ...) oder alle Silizide (Wolframsilizid, Tantalsilizid ...)als bevorzugte Materialien angesehen werden.

Die Art und Weise, wie die zur topologischen Nahfeldmessung geeignete Sonde mit dem leitenden Material bedeckt wird, ist nicht kritisch und vom jeweils aufzubringenden Material abhängig. Besonders bewährte Methoden umfassen das Ionen-Sputtern, das Elektronen-Sputtern, chemical vapour deposition (CVD)-Abscheidungen, electroless Plating, electroplating usw., im Einzelnen sind aber auch Flüssigphasenabscheidungsprozesse und Spincoating-Verfahren vorteilhafterweise verwendbar.

Das Bedecken der Schicht aus leitendem Material mit der Isolierschicht erfolgt bevorzugterweise durch Abscheidung aus der Gasphase durch einen CVD-Prozess, insbesondere aber auch durch einen plasmaunterstützten CVD-Prozess, Ionen-Sputtern, Elektronen-Sputtern, electroless Plating, electroplating und Aufbringen von isolierenden Polymerschichten, im Einzelnen sind aber auch Flüssigphasenabscheidungsprozesse und Spincoating-Verfahren denkbar. Bei der Isolierung ist sicherzustellen, dass das leitende Material vollständig bedeckt wird, so dass das leitende Material (außer dem später freigelegten Messbereich) keinen Kontakt zum elektroaktiven Medium hat.

Die Freilegung eines bestimmten Bereiches der leitenden Schicht erfolgt durch die gezielte Entfernung der Isolierschicht und der Schicht aus leitendem Material. Das Entfernen des leitenden Materials und/oder das Entfernen der Isolierschicht erfolgt bevorzugterweise durch einen fokussierten Ionenstrahl, oder durch einen Neutralteilchenstrahl, durch einen Ätzprozess, durch Laser oder durch fokussierte elektromagnetische Wellen, wobei die Entfernung durch fokussierten Ionenstrahl besonders bevorzugt ist (siehe z.B. Matsui et al., Nanotechnology 7 (1996), 247-258).

Erfindungsgemäß kann die Vorrichtung auch mit weiteren Schichten bzw. unterschiedlichen Schichtfolgen ausgestattet werden, und mit modifizierter Elektrode zur Verfügung gestellt werden, die als Mikrobiosensor, wie z.B. als Enzymelektrode, pH-sensitive Ultramikroelektrode, potentiometrische oder amperometrische Ultramikroelektrode, Ionen-sensitive Ultramikroelektrode, Ionenselektive Ultramikroelektrode, polymermodifizierte Ultramikroelektrode, biomimetische Ultramikroelektrode, ausgebildet ist. Anzahl und Anordnung der verschiedenen Bereiche zur elektrochemischen Nahfeldmessung in einer derartigen Multielektroden- und Multisensorkonfiguration sind demgemäß beliebig erweiterbar, in dem eben diese Schichtfolge und Schichtanzahl variiert wird, um Multiparametermessungen zu ermöglichen, wie z.B. simultanes, elektrochemisches, topographisches und pH-Mapping.

Weiters können auch mehrere Spitzen zur topographischen Nahfeldmessung bzw. mehrere Kombinationsvorrichtungen zur topographischen und zur elektrochemischen Nahfeldmessung in ein und derselben Vorrichtung vorgesehen werden.

Eine bevorzugte Variante des erfindungsgemäßen Verfahrens betrifft daher ein Verfahren, bei welchem auf die Isolierschicht wiederum ein leitendes Material aufgebracht wird, welches mit einer Isolierschicht bedeckt wird und dieses Aufbringen von leitendem Material und Bedecken mit Isolierschicht optional weitere Male wiederholt wird, bevor die verschiedenen leitenden Schichten im Messbereich wieder freigelegt werden.

Die zur topologischen Nahfeldmessung verwendbare Sonde als Grundkörper der erfindungsgemäßen Ultramikroelektrode ist bevorzugterweise eine Sonde aus Metall, aus einem Isolator, aus einem Halbleiter, aus einem Lichtleiter oder aus einem Hohlleiter. Falls die Sonde ein elektrischer Leiter ist, muss diese zunächst mit einer Isolierschicht versehen werden, worauf dann das erfindungsgemäße Verfahren durchgeführt werden kann.

Die Dimensionierung der Schichten (mit welcher im Wesentlichen der Bereich, mit welchem elektrochemischen Nahfeldeffekte gemessen werden, definiert wird) ist abhängig vom jeweiligen Einsatzgebiet und/oder dem Auflösevermögen der erfindungsgemäßen Vorrichtung, bevorzugterweise wird demgemäß das leitende Material in einer Dicke von 10 bis 2000 nm, vorzugsweise von 100 bis 800 nm, insbesondere von 150 bis 500 nm aufgetragen. Denkbar ist aber auch eine monoatomare oder monomolekulare leitende Schicht.

Die Isolierschicht wird bevorzugterweise in einer Dicke von 50 bis 5000 nm, vorzugsweise von 100 bis 2000 nm, insbesondere von 500 bis 1500 nm, aufgetragen. Auch hier sind jedoch monoatomare bzw. monomolekulare Schichten denkbar.

Der Bereich, in dem das leitende Material und die Isolierschicht abgetragen werden, richtet sich ebenfalls nach dem geplanten Einsatzgebiet der erfindungsgemäßen Vorrichtung bzw. deren Messeigenschaften bzw. sind auch abhängig von der jeweiligen Methode zur Abtrennung dieser Schichten. Bevorzugterweise wird ein Bereich von der Spitze bis zu einem Abstand von der Spitze von 10 bis 2000 nm, vorzugsweise von 50 bis 1000 nm, insbesondere von 100 bis 500 nm, abgetragen, wobei in jedem Einzelfall die besondere Geometrie der Sonde, von der ausgegangen wird, zu berücksichtigen ist.

Bevorzugterweise wird bereits im erfindungsgemäßen Herstellungsverfahren selbst vorgesorgt, dass an der Vorrichtung Anschlussvorrichtungen zur Abnahme der Messsignale vorgesehen werden.

Gemäß einem weiteren Aspekt betrifft die vorliegende Offenbarung eine Vorrichtung, die gemäß dem vorliegenden Verfahren erhalten werden kann.

Mit der Vorrichtung ist damit sowohl die elektrochemische Untersuchung von Oberflächen als auch die Bestimmung der Oberflächentopologie gleichzeitig und hochauflösend am selben Ort durchführbar.

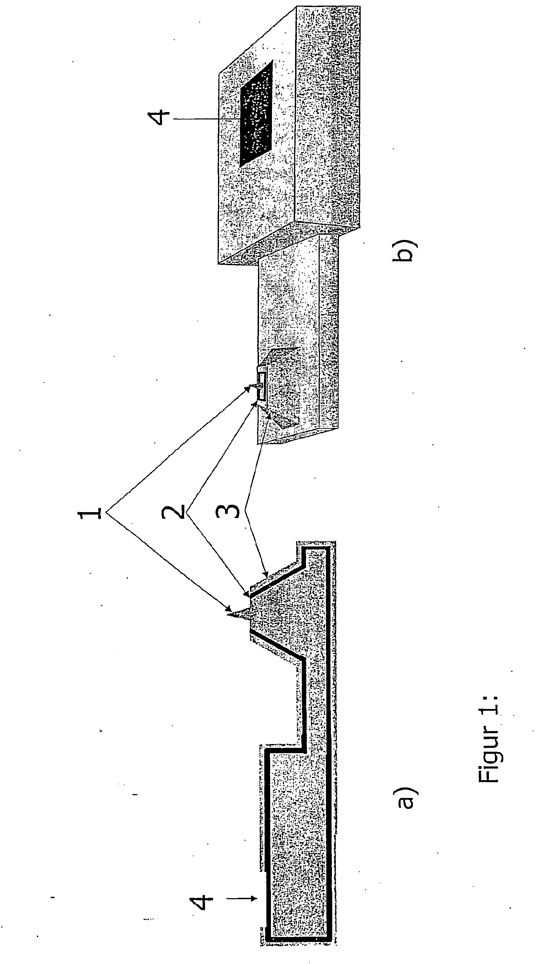

Eine mögliche Ausführungsform der Vorrichtung ist schematisch in Figur 1 dargestellt. Sie besteht aus folgenden Kernelementen:
(i) Einer isolierten Messspitze (1) zur Topologieuntersuchung
(ii) Einer Ultramikroelektrode (2) die die Messspitze umgibt.
(iii) Einer isolierenden Ummantelung (3), die die Messsonde mit Ausnahme der Messspitze, der Ultramikroelektrode und des Anschlussgebietes elektrisch isoliert.
(iv) Einer Anschlussfläche (4) die elektrisch leitend mit der Ultramikroelektrode verbunden ist.

Die Messspitze (i) die zur Aufnahme der Oberflächentopographie dient besteht bei der Messspitze aus Si₃N₄, kann aber mit dem vorliegenden Verfahren aus jedem Material hergestellt werden. Höhe und Form der Messspitze kann variiert werden. Typische Abmessungen ohne Einschränkung der Allgemeinheit sind eine Höhe von 0,2 µm bei einem Krümmungsradius der Spitzen von <30nm.

Die Geometrie der Ultramikroelektrode kann in Form und Größe kontrolliert variiert werden. Der Abstand der Elektrode zur Probenoberfläche wird durch die Höhe der oben beschriebenen Messspitze (i) eingestellt.

Eine isolierende Deckschicht (iii), z.B. Siliziumnitrid, überzieht die gesamte Sonde mit Ausnahme der Ultramikroelektrode, des Anschlussgebietes und der Messspitze und ist bei der erfindungsgemäßen Messspitze z.B. eine 900nm dicke Nitridschicht, die vorzugsweise mittels CVD aufgebracht wird. Es ist aber auch jede andere Isolationsschicht möglich, die den Ansprüchen an Isolation, Flexibilität und Beständigkeit gegenüber den bei der Messung eingesetzten Medien genügt. Diese Isolationsschicht muss ausreichend dick sein, um die Isolation zu garantieren und dünn genug, um die dynamischen Eigenschaften der Messspitze nicht einzuschränken.

Die Größe und Geometrie (kreisrunde-, elliptische-, rechteckige und auch unregelmäßige Elektrodenflächen) der elektrisch aktiven Fläche der Ultramikroelektrode kann in kontrollierter Weise hergestellt und variiert werden, wie auch der Abstand der Ultramikroelektrode zur Oberfläche und das Verhältnis dieses Abstandes zur elektrisch aktiven Fläche der Ultramikroelektrode.

Die Ummantelung der hergestellten Vorrichtung ist elektrisch isolierend und gegen die bei Messungen in flüssigen Medien eingesetzten Lösungen chemisch inert.

Die Erfindung wird anhand der nachfolgenden Ausführungsbeispiele sowie der Zeichnungsfiguren, auf die sie jedoch nicht beschränkt ist, näher erläutert.

Es zeigen:
- Fig. 1:: eine Prinzipskizze der Messvorrichtung in a) schematischem Querschnitt und b) in schematischer Aufsicht;
- Fig. 2:: eine Prinzipskizze zur Beschreibung des erfindungsgemäßen Herstellungsverfahrens;
- Fig. 3:: eine Prinzipskizze zur Beschreibung des erfindungsgemäßen Herstellungsverfahrens, a) Ansicht der Seitenfläche und b) Ansicht der Stirnfläche;
- Fig. 4:: eine Prinzipskizze der Messvorrichtung;
- Fig. 5:: eine Prinzipskizze zur Beschreibung des erfindungsgemäßen Herstellungsverfahrens;
- Fig. 6:: eine Prinzipskizze zur Beschreibung des erfindungsgemäßen Herstellungsverfahrens für Multielektroden; und
- Fig. 7:: eine Prinzipskizze zur Beschreibung des erfindungsgemäßen Herstellungsverfahrens für Multielektroden mit elektrisch leitender Messspitze.

### Beispiel : Herstellung der erfindungsgemäßen Vorrichtung mit integrierter Ultramikroelektrode

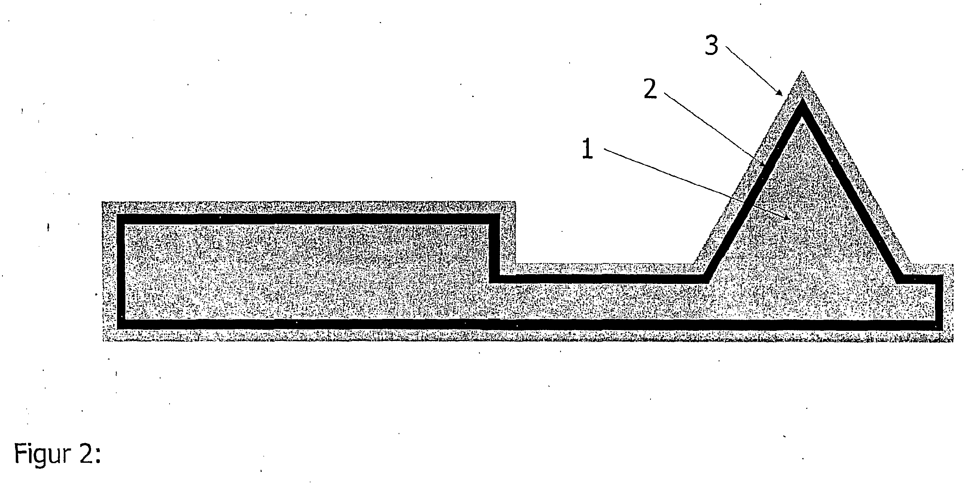

Die Vorrichtung lässt sich in vorteilhafter Weise mit einem erfindungsgemäßen Verfahren herstellen, wie es im Folgenden näher beschrieben wird. Das in den beigefügten Prinzipskizzen (Figur 2 bis 5) dargestellte Herstellungsverfah-ren umfasst im wesentlichen folgende Schritte:

Bei der Vorrichtung mit integrierter Ultramikroelektrode liegt im Ausführungsbeispiel ein Grundkörper zunächst in Form eines Si₃N₄-Cantilevers (Figur 2 (1)) vor. Auf diesen wird eine leitende Schicht aufgebracht, im Ausführungsbeispiel werden 200 nm Gold aufgesputtert. Die elektrisch leitende Schicht wird mit einer isolierenden Schicht überzogen, die gegenüber den bei Messungen in flüssigen Medien eingesetzten Lösungen beständig sein muss (Figur 2 (3)). Bei der Messvorrichtung wurde z.B. mit einem plasmaunterstützten CVD-Prozess eine 900 nm dicke Siliziumnitridschicht abgeschieden.

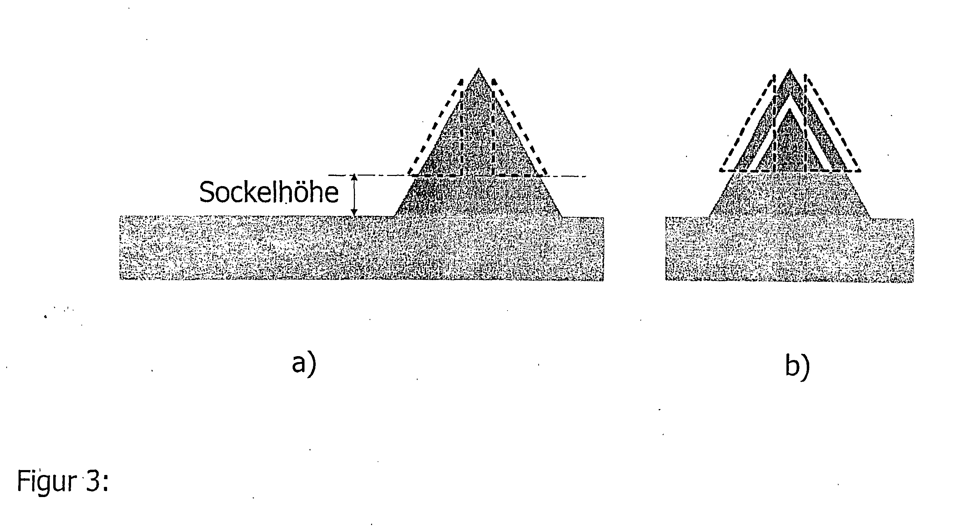

Im nächsten Schritt wird mit einem materialabtragenden Verfahren, vorzugsweise mit einer "focused ion beam"-Anlage, wie in Figur 3 dargestellt, lokal (strichlierte Bereiche in Figur 3) die äußere Isolationsschicht über der Elektrode und ein Teil der Elektrode und des Grundkörpers entfernt. Dieser Prozess wird einmal von der Seitenfläche her (Figur 3a) und einmal 90° dazu versetzt von der Stirnfläche her (Figur 3b) durchgeführt.

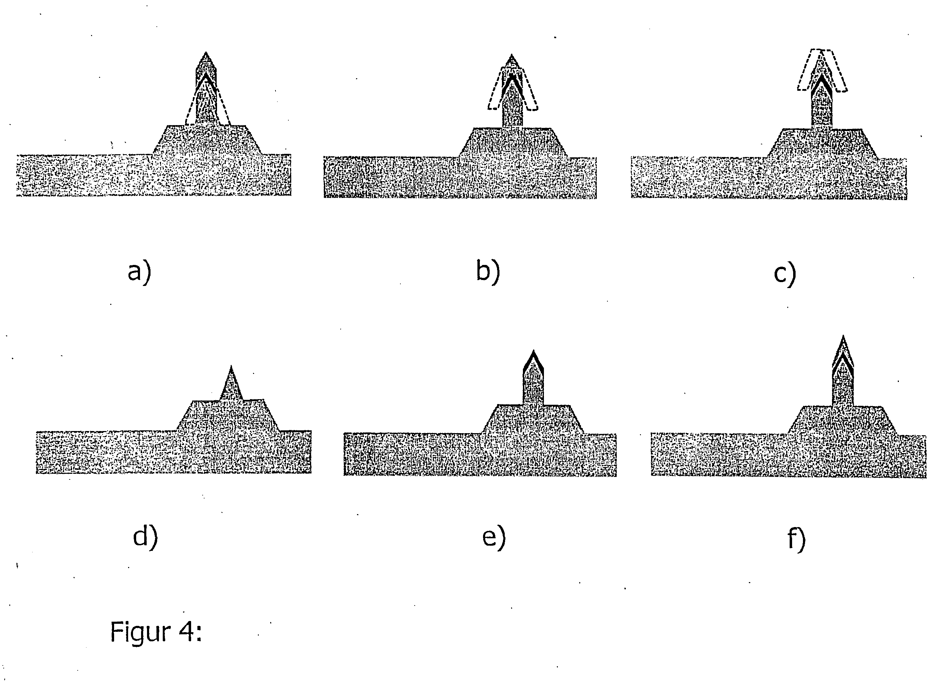

Aus dem verbliebenen Quader mit aufgesetzter Pyramide mit der Materialabfolge Isolator-Metall-Isolator wird vorzugsweise mit der "focused ion beam"-Anlage durch Abtragen der in Figur 4 strichliert eingezeichneten Bereiche wiederum wie im vorigen Prozeßschritt jeweils einmal von der Seiten- und Stirnfläche her eine neue Messspitze geformt.

Erfindungsgemäß kann die Messspitze durch geeignete Wahl des Materialabtrages aus dem Material des Grundkörpers (Figur 4 a) der leitenden Schicht (Figur 4 b) oder der Isolationsschicht über dem Metall (Figur 4 c) geformt werden. Die Abbildungen d,e und f in Figur 4 zeigen die sich dabei ergebenden Spitzenkonfigurationen.

Die Höhe der Spitze, der Spitzenradius und die Form der Spitze können durch geeignet gewählten Materialabtrag ebenfalls variiert werden. Die Messspitze besteht beim Ausführungsbeispiel aus dem Material des eingesetzten Cantilevers.

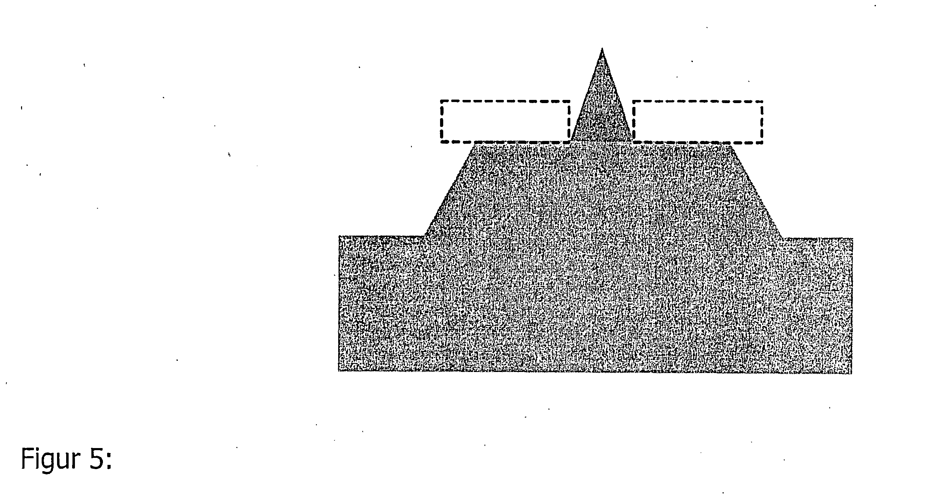

Abschließend werden die Elektrodenflächen im Ausführungsbeispiel durch eine spezielle Form des Materialabtrages mit der FIB (single pass mill) von redeponiertem Material gereinigt. Bei diesem single pass mill rastert der materialabtragende Ionenstrahl nur einmal die in Figur 5 strichliert eingezeichneten Bereiche von oben nach unten ab, sodass zuletzt nur einmal die Probenoberfläche vom Ionenstrahl abgesputtert und damit redeponiertes Material entfernt wird.

Erfindungsgemäß kann aber jedes andere Verfahren, dass strukturerhaltend die Oberfläche reinigt, wie z.B. ein Ätzprozess, zur Reinigung der Elektrodenflächen eingesetzt werden.

Die Kontaktierung der Ultramikroelektrode kann an jedem beliebigen Punkt erfolgen, indem durch ein strukturgebendes Verfahren die oberste Isolationsschicht lokal entfernt und ein entsprechender Anschlusskontakt zur leitenden Schicht freigelegt wird.

In obigem Ausführungsbeispiel erfolgt die Kontaktierung der Ultramikroelektrode am hinteren Ende des Glaskörpers des Cantilevers (Figur 1).

Aus dem erfindungsgemäßen Verfahren ergeben sich z.B. folgende Möglichkeiten, die Elektrodenfläche oder Geometrie bzw. das Verhältnis von Elektrodenfläche zum Abstand der Elektrode-von der Probenoberfläche und den lateralen Abstand der Elektrode (des Bereiches zur elektrochemischen Nahfeldmessung) von der Messspitze (dem Bereich zur topologischen Nahfeldmessung) zu variieren:
1. Durch Aufbringen unterschiedlich dicker elektrisch leitender Schichten kann die elektrisch aktive Fläche der Sonde unabhängig von der in Figur 3 eingezeichneten Sockelhöhe variiert werden.
2. Bei einer festgelegten Dicke der elektrisch leitenden Schicht kann, wie im Fall des Ausführungsbeispieles, bei einem pyramidenförmigen Grundkörper für größere Sockelhöhen (Figur 3) die Elektrodenflächen verkleinert werden.
3. Die Geometrie der Elektrode lässt sich durch Wahl des Grundkörpers, auf dem die elektrisch leitende Schicht aufgebracht wird, variieren. Im Ausführungsbeispiel wurde ein Cantilever verwendet, bei dessen pyramidenförmigen Spitze sich eine - wie aus Figur 1 ersichtlich - quadratische Rahmenelektrode ergibt. Erfindungsgemäß kann aber jeder beliebig geformte Grundkörper als Ausgangsmaterial eingesetzt werden und damit z.B. kreisrunde, elliptische, rechteckige oder vieleckige Elektroden realisieren. Mit der im Ausführungsbeispiel eingesetzten focused ion beam-Anlage kann ebenso wie mit jedem geeigneten strukturgebenden Verfahren jede beliebige auch unregelmäßige Form des Grundkörpers vorgegeben werden, wodurch sich nicht geschlossene, insbesondere auch segmentierte Ultramikroelektroden, realisieren lassen.
4. Das Verhältnis Elektrodenfläche/Abstand der Elektrode zur Probenoberfläche lässt sich durch die Einstellung der Höhe der Messspitze variieren.
5. Der laterale Abstand der Mikroelektrode von der Messspitze zur Bestimmung der Oberflächentopologie kann wie im Ausführungsbeispiel bei entsprechend geformten Grundkörper durch die Sockelhöhe (Figur 3) festgelegt werden.

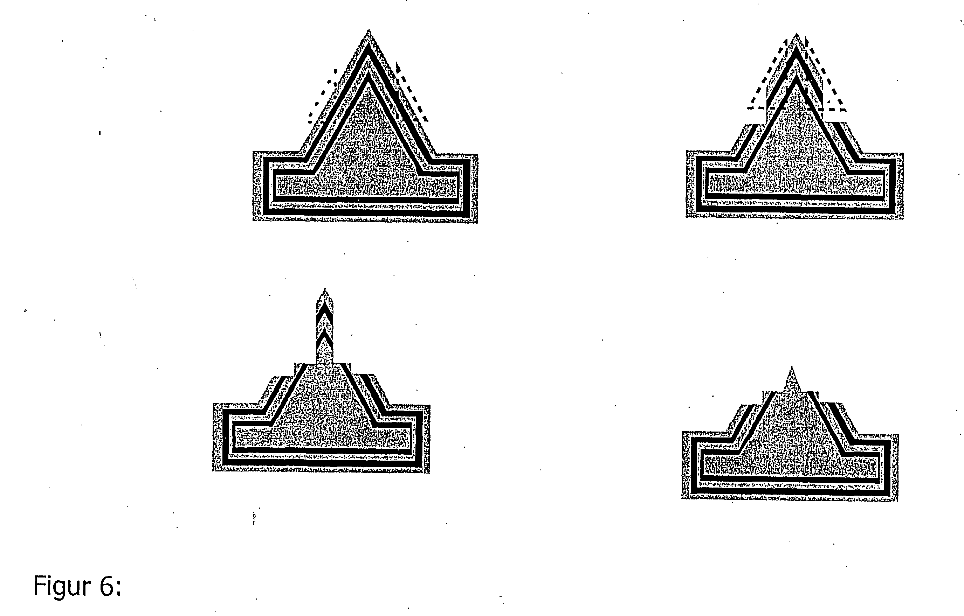

Das erfindungsgemäße Verfahren ist hinsichtlich der Anzahl der Schichten und der Schichtabfolgen nicht eingeschränkt. Durch alternierendes Beschichten des isolierenden Grundkörpers mit leitenden und isolierenden Schichten und, analog zum Ausführungsbeispiel, anschließendes lokales Abtragen des Materials, können damit auch Multielektroden hergestellt werden. Die Abstände der einzelnen Elektroden zur Probenoberfläche können dabei unterschiedlich sein. Figur 6 zeigt exemplarisch ein Ausführungsbeispiel für eine Doppelelektrode. Für eine erfindungsgemäße Sonde mit mehreren integrierten Elektroden gilt sinngemäß das beschriebene Verfahren mit der Modifikation, dass der materialabtragende Schritt zweimal mit unterschiedlicher Sockelhöhe durchgeführt werden kann (Figur 6). Das Herstellen der eigentlichen Messspitze und das Entfernen von redeponiertem Material von der Elektrode wird analog zum oben beschriebenen Ausführungsbeispiel durchgeführt.

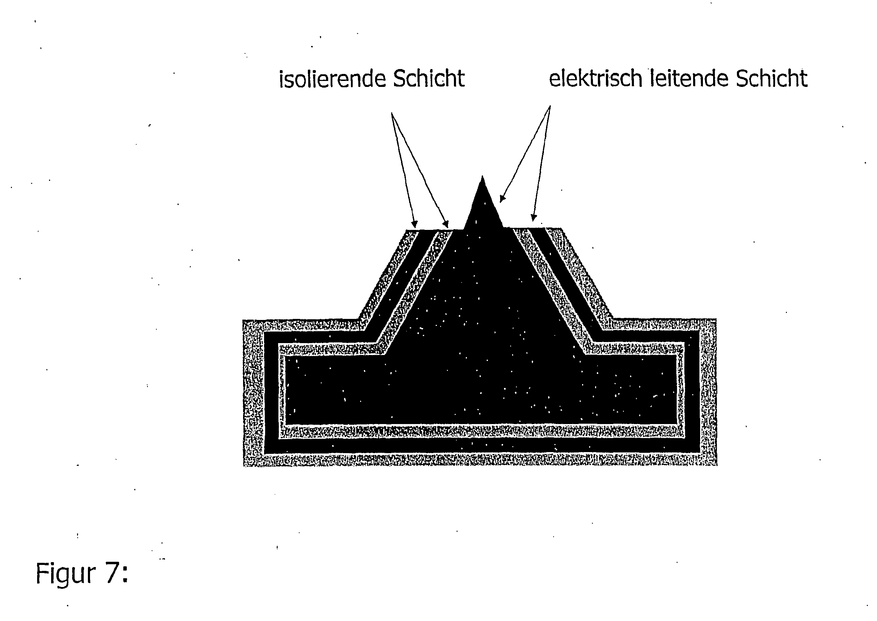

Wird als Grundkörper ein elektrisch leitendes Material eingesetzt, erhält man durch eine Reihe von strukturgebenden Abscheide- und Ätzschritten eine Doppelelektrode, wobei die Messspitze nun selbst elektrisch leitend ist (Figur 7).

Hierbei können beliebige Mehrschichtsysteme aufgebaut und damit Multielektroden realisiert werden.

Als Grundkörper der Sonde ist jedes Material einsetzbar, insbesondere auch Lichtleiter und allgemein Wellenleiter für elektromagnetische Wellen. In diesem Fall kann z.B. ein Lichtstrahl (allgem. elektromagnetische Wellen) bis zur Sondenspitze geführt und auf die Probe geleitet werden. Ferner kann auch eine äußere Mantelschicht in diesem Sinne als Wellenleiter oder Lichtleiter verwendet werden.

## Patentansprüche

1. Verfahren zur Herstellung einer Vorrichtung, umfassend eine Sonde (1) mit einer Spitze, für die gleichzeitige Durchführung einer elektrochemischen und einer topographischen Nahfeldmikroskopie, wobei eine zur topographischen Nahfeldmikroskopie geeignete Sonde (1) mit einem leitenden Material (2) bedeckt wird, das leitende Material (2) mit einer Isolierschicht (3) bedeckt wird, **dadurch gekennzeichnet, dass** das leitende Material (2) und die Isolierschicht (3) im Bereich der sich von der unmittelbaren Spitze bis zu einem Abstand von 10 bis 2000 nm von der unmittelbaren Spitze der Sonde (1) erstreckt, entfernt wird.

2. Verfahren nach Anspruch 1, **dadurch gekennzeichnet, dass** die Sonde (1) mit dem leitenden Material (2) umhüllt wird.

3. Verfahren nach Anspruch 1 oder 2, **dadurch gekennzeichnet, dass** das leitende Material (2) ausgewählt ist aus Kohlenstoff, Carbonelektroden-Glaskohlenstoff, hochgeordnetem pyrolytischen Graphit, Polysilizium, dotiertem Polysilizium, Metallnitriden, Siliziden, Metall oder Metalllegierungen, insbesondere Gold, Silber, Platin, Palladium, Wolfram, Cadmium, Aluminium, Rhodium, Iridium, Kupfer, Quecksilber-Legierungen, Platin-Iridium-Legierung, Platin-Rhodium-Legierung, insbesondere TiN, TaN, Wolframsilizid oder Tantalsilizid.

4. Verfahren nach einem der Ansprüche 1 bis 3, **dadurch gekennzeichnet, dass** das Bedecken der Sonde (1) mit dem leitenden Material (2) durch Ionen-Sputtern, Elektronen-Sputtern, chemical vapour deposition-Prozess, electroless Plating, electroplating, einem Flüssigphasenabscheidungsprozess oder einem Spincoating-Verfahren erfolgt.

5. Verfahren nach einem der Ansprüche 1 bis 4, **dadurch gekennzeichnet, dass** das Bedecken der Schicht aus leitendem Material (2) mit der Isolier-Schicht (3) durch eine Abscheidung aus der Gasphase, bevorzugt durch einen plasmaunterstützten CVD-Prozess, Ionen-Sputtern, Elektronen-Sputtern, electroless Plating, electroplating, Aufbringen von isolierenden Polymerschichten, Flüssigphasenabscheidungsprozesse und Spincoating-Verfahren, erfolgt.

6. Verfahren nach einem der Ansprüche 1 bis 5, **dadurch gekennzeichnet, dass** das Entfernen des leitenden Materials (2) und/oder das Entfernen der Isolierschicht (3) durch einen fokussierten Ionenstrahl, oder durch einen Neutralteilchenstrahl, durch einen Ätzprozess, durch Laser oder durch fokussierte elektromagnetische Wellen erfolgt.

7. Verfahren nach einem der Ansprüche 1 bis 6, **dadurch gekennzeichnet, dass** vor dem Entfernen der Isolierschicht im Bereich der Spitze der Sonde auf die Isolierschicht (3) wiederum ein leitendes Material aufgebracht wird, welches mit einer Isolierschicht bedeckt wird und dieses Aufbringen von leitendem Material und Bedecken mit Isolierschicht optional weitere Male wiederholt wird.

8. Verfahren nach einem der Ansprüche 1 bis 7, **dadurch gekennzeichnet, dass** als Sonde (1) eine Sonde aus Metall, aus einem Isolator, aus einem Halbleiter, aus einem Lichtleiter oder aus einem Hohlleiter, vorgesehen wird.

9. Verfahren nach einem der Ansprüche 1 bis 8, **dadurch gekennzeichnet, dass** das leitende Material (2) bzw. die leitenden Materialien jeweils in einer Dicke von 10 bis 2000 nm, vorzugsweise von 100 bis 800 nm, insbesondere von 150 bis 500 nm, aufgetragen wird/werden.

10. Verfahren nach einem der Ansprüche 1 bis 9, **dadurch gekennzeichnet, dass** die Isolierschicht (3) bzw. die Isolierschichten jeweils in einer Dicke von 5 bis 5000 nm, vorzugsweise von 100 bis 2000 nm, insbesondere von 500 bis 1500 nm, aufgetragen wird/werden.

11. Verfahren nach einem der Ansprüche 1 bis 10, **dadurch gekennzeichnet, dass** das leitende Material (2) und die Isolierschicht (3) in einem Bereich entfernt werden, der sich von der unmittelbaren Spitze bis zu einem Abstand von der unmittelbaren Spitze von 50 bis 1000 nm, vorzugsweise von 100 bis 500 nm, erstreckt.

12. Verfahren nach einem der Ansprüche 1 bis 11, **dadurch gekennzeichnet, dass** an der Vorrichtung Anschlussvorrichtungen zur Abnahme der Messsignale vorgesehen werden.

13. Verfahren nach einem der Ansprüche 1 bis 8, **dadurch gekennzeichnet, dass** die Schicht aus leitendem Material (2) bzw. die Schichten aus leitendem Material und/oder die Isolierschicht (3) bzw. Isolierschichten jeweils als monoatomare oder monomolekulare Schicht ausgebildet ist.

14. Verfahren nach einem der Ansprüche 1 bis 13, **dadurch gekennzeichnet, dass** das leitende Material (2) bzw. die leitenden Materialien durch das Entfernen der Isolierschicht (3) bzw. der Isolierschichten in kreisförmiger, elliptischer oder rechteckiger Form freigelegt wird.

## Claims

1. A method of producing a device, comprising a probe (1) with a tip, for simultaneously carrying out an electrochemical and a topographical near field microscopy, wherein a probe (1) suitable for topographical near field microscopy is covered with a conductive material (2), the conductive material (2) is covered with an insulating layer (3), **characterised in that** the conductive material (2) and the insulating layer (3) are removed in the region which extends from the immediate tip as far as to a distance from the immediate tip of the probe (1) of from 10 to 2000nm.

2. A method according to claim 1, **characterised in that** the probe (1) is enveloped with the conductive material (2).

3. A method according to claim 1 or 2, **characterised in that** the conductive material (2) is selected from carbon, carbon electrode-glassy carbon, high-order pyrolytic graphite, polysilicon, doped polysilicon, metal nitrides, silicides, metal or metal alloys, in particular gold, silver, platinum, palladium, tungsten, cadmium, aluminium, rhodium, iridium, copper, mercury alloys, platinum-iridium-alloy, platinum-rhodium-alloy, in particular TiN or TaN, tungsten silicide or tantalum silicide.

4. A method according to any one of claims 1 to 3, **characterised in that** the covering of the probe (1) with the conductive material (2) is effected by ion sputtering, electron sputtering, chemical vapour deposition process, electroless plating, electroplating, a liquid phase deposition process or a spincoating method.

5. A method according to any one of claims 1 to 4, **characterised in that** the covering of the layer of conductive material (2) with the insulating layer (3) is effected by deposition from the gas phase, preferably by a plasma-supported CVD process, ion sputtering, electron sputtering, electroless plating, electroplating, application of insulating polymer layers, liquid phase deposition processes and spincoating methods.

6. A method according to any one of claims 1 to 5, **characterised in that** the removal of the conductive material (2) and/or the removal of the insulating layer (3) is effected by a focussed ion beam or by a neutral particle beam, by an etching process, by laser or by focussed electromagnetic waves.

7. A method according to any one of claims 1 to 6, **characterised in that** prior to removing the insulating layer in the region of the tip of the probe, again, a conductive material is applied on the insulating layer (3), which material is covered with an insulating layer, and **in that** this application of conductive material and covering with insulating layer is optionally repeated several times.

8. A method according to any one of claims 1 to 7, **characterised in that** a probe of metal, of an insulator, of a semiconductor or of a wave guide is provided as probe (1).

9. A method according to any one of claims 1 to 8, **characterised in that** the conductive material (2) and/or the conductive materials is/are applied in a thickness of from 10 to 2000nm each, preferably from 100 to 800nm, in particular of from 150 to 500nm.

10. A method according to any one of claims 1 to 9, **characterised in that** the insulating layer (3) and/or the insulating layers is/are applied in a thickness of from 5 to 5000nm each, preferably from 100 to 2000nm, in particular from 500 to 1500nm.

11. A method according to any one of claims 1 to 10, **characterised in that** the conductive material (2) and the insulating layer (3) are removed in a region which extends from the immediate tip as far as to a distance from the immediate tip of from 50 to 1000nm, in particular from 100 to 500nm.

12. A method according to any one of claims 1 to 11, **characterised in that** connecting devices are provided on the device for recording the measurement signals.

13. A method according to any one of claims 1 to 8, **characterised in that** the layer of conductive material (2) and/or the layers of conductive material and/or the insulating layer (3) and/or the insulating layers is/are formed as monoatomic or monomolecular layer.

14. A method according to any one of claims 1 to 13, **characterised in that** the conductive material (2) and/or the conductive materials is/are bared by removal of the insulating layer (3) and/or the insulating layers in circular, elliptic or rectangular shape.

## Revendications

1. Procédé pour la production d'un dispositif, comprenant une sonde (1) avec une pointe, permettant l'exécution simultanée d'une microscopie à champ proche électrochimique et topographique, dans lequel on recouvre une sonde (1) convenant pour la microscopie à champ proche topographique avec une matière conductrice (2), on recouvre la matière conductrice (2) avec une couche isolante (3), **caractérisé en ce que** l'on enlève la matière conductrice (2) et la couche isolante (3) dans la région s'étendant de la pointe directe jusqu'à une distance de 10 à 2000 nm de la pointe directe de la sonde (1).

2. Procédé selon la revendication 1, **caractérisé en ce que** l'on enveloppe la sonde (1) avec la matière conductrice (2).

3. Procédé selon la revendication 1 ou 2,
**caractérisé en ce que** l'on sélectionne la matière conductrice (2) parmi le carbone, le carbone vitreux d'électrodes de carbone, le graphite pyrolytique d'ordre supérieur, le polysilicium, le polysilicium dopé, les nitrures métalliques, les siliciures, les métaux ou les alliages métalliques tels que l'or, l'argent, le platine, le palladium, le tungstène, le cadmium, l'aluminium, le rhodium, l'iridium, le cuivre, les alliages de mercure, l'alliage platine-iridium, l'alliage platine-rhodium, en particulier TiN, TaN, le siliciure de tungstène ou le siliciure de tantale.

4. Procédé selon l'une quelconque des revendications 1 à 3, **caractérisé en ce que** l'on effectue le recouvrement de la sonde (1) avec la matière conductrice (2) par pulvérisation ionique, par pulvérisation électronique, par dépôt de vapeur chimique, par revêtement sans courant, par revêtement électrolytique, par un procédé de dépôt en phase liquide ou par un procédé de revêtement par centrifugation.

5. Procédé selon l'une quelconque des revendications 1 à 4, **caractérisé en ce que** l'on effectue le recouvrement de la couche en matière conductrice (2) avec la couche isolante (3) par un dépôt en phase gazeuse, de préférence par un procédé CVD assisté par plasma, par pulvérisation ionique, par pulvérisation électronique, par revêtement sans courant, par revêtement électrolytique, par application de couches de polymère isolantes, par des procédés de dépôt en phase liquide et par des procédés de dépôt par centrifugation.

6. Procédé selon l'une quelconque des revendications 1 à 5, **caractérisé en ce que** l'on effectue l'enlèvement de la matière conductrice (2) et/ou l'enlèvement de la couche isolante (3) par un faisceau ionique focalisé, ou par un faisceau de particules neutres, par un procédé de décapage, par un laser ou par des ondes électromagnétiques focalisées.

7. Procédé selon l'une quelconque des revendications 1 à 6, **caractérisé en ce que**, avant l'enlèvement de la couche isolante dans la région de la pointe de la sonde, on dépose de nouveau sur la couche isolante (3) une matière conductrice, qui est recouverte par une couche isolante, et on répète un nombre de fois au choix ce dépôt de matière conductrice et ce recouvrement avec une couche isolante.

8. Procédé selon l'une quelconque des revendications 1 à 7, **caractérisé en ce que** l'on prévoit comme sonde (1) une sonde en métal, en un isolant, en un semi-conducteur, en un guide d'onde de lumière ou en un conducteur creux.

9. Procédé selon l'une quelconque des revendications 1 à 8, **caractérisé en ce que** l'on dépose la matière conductrice (2) ou les matières conductrices chaque fois avec une épaisseur de 10 à 2000 nm, de préférence de 100 à 800 nm, et en particulier de 150 à 500 nm.

10. Procédé selon l'une quelconque des revendications 1 à 9, **caractérisé en ce que** l'on dépose la couche isolante (3) ou les couches isolantes chaque fois avec une épaisseur de 5 à 5000 nm, de préférence de 100 à 2000 nm, en particulier de 500 à 1500 nm.

11. Procédé selon l'une quelconque des revendications 1 à 10, **caractérisé en ce que** l'on enlève la matière conductrice (2) et la couche isolante (3) dans une région, qui s'étend de la pointe directe jusqu'à une distance de la pointe directe de 50 à 1000 nm, de préférence de 100 à 500 nm.

12. Procédé selon l'une quelconque des revendications 1 à 11, **caractérisé en ce que** l'on prévoit sur le dispositif des systèmes de raccordement pour prélever les signaux de mesure.

13. Procédé selon l'une quelconque des revendications 1 à 8, **caractérisé en ce que** l'on réalise la couche de matière conductrice (2) ou les couches de matière conductrice et/ou la couche isolante (3) ou les couches isolantes chaque fois sous la forme d'une couche monoatomique ou monomoléculaire.

14. Procédé selon l'une quelconque des revendications 1 à 13, **caractérisé en ce que** l'on dégage la matière conductrice (2) ou les matières conductrices par l'enlèvement de la couche isolante (3) ou des couches isolantes selon une forme circulaire, elliptique ou rectangulaire.
